# EUROPEAN PATENT APPLICATION

(11) **EP 4 322 635 A1**
(43) Date of publication of application: **14.02.2024**
(21) Application number: 22190023.6
(22) Date of filing: 11.08.2022
(51) Int. Cl.: H04W 64/00, H04W 4/02, H04W 8/00, H04W 8/24, H04W 8/20, H04W 76/15, H04L 67/51, H04L 41/50

(54) **METHOD AND APPARATUS FOR A TERMINAL DEVICE**

(71) Applicant: Robert Bosch GmbH, 70442 Stuttgart (DE)
(72) Inventor: Hassan, Khaled Shawky, 30880 Laatzen (DE); Stark, Maximilian, 20249 Hamburg (DE)

(57) **Abstract**

A method, for example a computer-implemented method, comprising: providing, by a terminal device, a first information characterizing a position of the terminal device, performing at least one sidelink-based positioning procedure associated with at least one further terminal device.

## Description

### Technical Field

The disclosure relates to a method for a terminal device.

The disclosure further relates to an apparatus for a terminal device.

### Summary

Some exemplary embodiments relate to a method, for example a computer-implemented method, comprising: providing, by a terminal device, a first information characterizing a position of the terminal device, performing at least one sidelink-based positioning procedure associated with at least one further terminal device. In some exemplary embodiments, the first information may e.g. be used for preparing and/or for performing the at least one sidelink-based positioning procedure.

In some exemplary embodiments, the terminal device and/or the at least one further terminal device can e.g. be used with a wireless, for example cellular, communications system, which is for example based on and/or adheres at least partially to at least one third generation partnership project, 3GPP, radio standard such as 4G (fourth generation), 5G (fifth generation), 6G (sixth generation) or other radio access technology.

In some exemplary embodiments, the first terminal device and/or the at least one further terminal device may be a user equipment (UE) or a data transceiver modem, which, for example, may be associated with a mobile object such as e.g. a vehicle, for example car or truck or the like.

In some exemplary embodiments, the first terminal device and/or the at least one further terminal device may be at least one of: an loT (Internet of Things) device, an infrastructure component or part of an infrastructure component (e.g., traffic lights, street lights, traffic sign, toll gate), an industrial automation component, e.g. IloT (Industrial loT) component or infrastructure (e.g., robots, machines, etc.), a device for a mobile broadband user, and/or a vehicle.

In some exemplary embodiments, a network device may be provided, which may e.g. be a base station, e.g. for a wireless, for example cellular, communications system, which is for example based on and/or adheres at least partially to at least one third generation partnership project, 3GPP, radio standard such as 4G (fourth generation), 5G (fifth generation), 6G (sixth generation) or other radio access technology.

In some exemplary embodiments, the network device may e.g. be a gNB.

In some exemplary embodiments, providing the first information comprises at least one of: a) determining the position of the terminal device using a satellite-based positioning procedure, e.g. based on a, for example global, navigation satellite system, b) determining the position of the terminal device using laser scanning, c) determining the position of the terminal device using tachometry, d) determining the position of the terminal device based on a-priori knowledge related to the position, e.g. associated with at least one of: d1) a configuration of the terminal device, d2) standardization, d3) deployment of the terminal device, e.g. based on position measurements during an installation of the terminal device, e) receiving the position of the terminal device from at least one further entity, f) determining the position of the terminal device using sidelink-based positioning, g) determining the position of the terminal device using a positioning procedure, e.g. other than sidelink-based, e.g. based on an air interface, e.g. Uu-interface according to some accepted standard.

In some exemplary embodiments, the method comprises: assuming, by the terminal device, at least temporarily a role of a reference terminal device and/or an anchor terminal device for the at least one sidelink-based positioning procedure with the at least one further terminal device, wherein, for example, the at least one further terminal device at least temporarily assumes a role of a target terminal device.

In some exemplary embodiments, the method comprises: assuming, by the terminal device, at least temporarily a role of a target terminal device for at least one further sidelink-based positioning procedure with the at least one further terminal device, wherein, for example, the at least one further terminal device at least temporarily assumes a role of a reference terminal device and/or an anchor terminal device.

In some exemplary embodiments, the method comprises: using, by the terminal device, an information element to indicate to at least one further entity, for example to a network device and/or to a further terminal device, information related to the providing of the first information, wherein for example the information related to the providing of the first information characterizes at least one of: a) how the position of the terminal device is and/or has been provided, b) whether the position of the terminal device is and/or has been provided using a specific positioning procedure, e.g. a positioning procedure other than a or the positioning procedure based on an air interface, e.g. Uu-interface according to some accepted standard, c) whether the position of the terminal device is and/or has been provided using a positioning procedure which is not defined and/or related to a communications standard, for example which is not defined and/or related to a third generation partnership project, 3GPP,- related positioning methodology, d) an accuracy related to first information.

In some exemplary embodiments, the method comprises: transmitting, by the terminal device, the information element to the at least one further entity, for example to a network device and/or to a further terminal device, wherein for example the transmitting is performed during at least one of: a) a configuration phase associated with the terminal device, b) a discovery phase associated with at least one further terminal device, e.g. target terminal device.

In some exemplary embodiments, the method comprises: using, by the terminal device, an information element to signal to at least one further entity, for example to a network device and/or to a further terminal device, that the first information is trustworthy.

In some exemplary embodiments, the method comprises: verifying, by the terminal device, the position of the terminal device, wherein for example the verifying is performed repeatedly, for example periodically, for example during an operation of the terminal device.

In some exemplary embodiments, the method comprises: receiving, by the terminal device, via a sidelink interface, e.g. a PC5 interface according to some accepted standard, at least a first positioning reference signal, wherein, for example, the at least one first positioning reference signal may e.g. be a groupcast signal transmitted from at least one further terminal device, e.g. a target terminal device, and, transmitting, by the terminal device, a second positioning reference signal based on the first positioning reference signal, for example in response to the receiving of the first positioning reference signal, via the sidelink interface, e.g. at least to the at least one further terminal device.

In some exemplary embodiments, the transmitting of the second positioning reference signal comprises at least one of: a) transmitting the second positioning reference signal multiplexed in time, e.g. with respect to the first positioning reference signal, b) transmitting the second positioning reference signal interleaved in at least one of b1) time and b2) frequency, e.g. with respect to the first positioning reference signal.

In some exemplary embodiments, the method comprises: transmitting, by the terminal device, a third positioning reference signal via the sidelink interface, e.g. in form of a groupcast signal, e.g. at least to the at least one further terminal device, and receiving, by the terminal device, via the sidelink interface, at least a fourth positioning reference signal, wherein, for example, the fourth positioning reference signal is transmitted by the at least one further terminal device, e.g. based on the third positioning reference signal, for example in response to the third positioning reference signal.

In some exemplary embodiments, the method comprises: using time and/or frequency resources, e.g. for at least one of the transmitting and the receiving, based on at least one of: a) configuration by at least one further terminal device, e.g. target terminal device, e.g. associated with at least one preferred sidelink feedback channel of the at least one further terminal device, b) configuration by at least one network device, e.g. via Uu interface control information, c) preconfiguration, e.g. of the terminal device, d) standardization.

Further exemplary embodiments relate to an apparatus, for example for a terminal device, for performing the method according to the embodiments.

Further exemplary embodiments relate to an apparatus, for example for a terminal device, comprising means, for performing the method according to the embodiments.

In some exemplary embodiments, the apparatus and/or its functionality may e.g. be provided within the terminal device. In some exemplary embodiments, the apparatus and/or its functionality may e.g. be provided outside of the terminal device, e.g. in form of a, for example separate, device, that may e.g. be at least temporarily coupled with the terminal device.

Further exemplary embodiments relate to a communication system or network comprising at least one apparatus according to the embodiments.

In some exemplary embodiments, the communication system or network may comprise at least one terminal device comprising at least one apparatus according to the embodiments.

Further exemplary embodiments relate to a computer program comprising instructions which, when the program is executed by a computer, cause the computer to carry out the method according to the embodiments.

Further exemplary embodiments relate to a computer-readable storage medium comprising instructions which, when executed by a computer, cause the computer to carry out the method according to the embodiments.

Further exemplary embodiments relate to a data carrier signal carrying and/or characterizing the computer program according to the embodiments.

Further exemplary embodiments relate to a use of the method according to the embodiments and/or of the apparatus according to the embodiments and/or of the communication system according to the embodiments and/or of a computer program according to the embodiments, and/or of a computer-readable storage medium according to the embodiments and/or of a data carrier signal according to the embodiments, for at least one of: a) performing at least one sidelink-based positioning procedure, b) assisting a network device and/or at least one further terminal device in performing at least one positioning procedure, c) validating at least one positioning procedure, d) increasing a precision of at least one positioning procedure associated with the terminal device, e) performing hybrid positioning associated with the terminal device, f) employing sidelink ranging capabilities of at least one terminal device, e.g. for positioning, g) increasing a flexibility of positioning associated with at the terminal device, h) performing on-demand sidelink-based positioning, e.g. upon request of at least one network device and/or at least one further terminal device, i) providing positioning capabilities to communications networks, e.g. associated with car-to-car communication and/or communication of Industrial Internet of Things, IloT, device and/or vehicle-to-X, V2X, communication, j) assigning, for example dynamically, e.g. during operation, assigning, different roles associated with at least one sidelink-based positioning procedure to the terminal device, k) determining a position of the terminal device, e.g. as a reference terminal device and/or as an anchor terminal device, I) assessing a reliability of a position of the terminal device, e.g. as a reference terminal device and/or as an anchor terminal device, m) verifying, for example by a network device, the position of the terminal device.

Some exemplary embodiments will now be described with reference to the accompanying drawings, in which:
- Fig. 1: schematically depicts a simplified flow-chart according to exemplary embodiments,
- Fig. 2: schematically depicts a simplified block diagram according to exemplary embodiments,
- Fig. 3: schematically depicts a simplified block diagram according to exemplary embodiments,
- Fig. 4: schematically depicts a simplified flow-chart according to exemplary embodiments,
- Fig. 5: schematically depicts a simplified flow-chart according to exemplary embodiments,
- Fig. 6: schematically depicts a simplified flow-chart according to exemplary embodiments,
- Fig. 7: schematically depicts a simplified flow-chart according to exemplary embodiments,
- Fig. 8: schematically depicts a simplified flow-chart according to exemplary embodiments,
- Fig. 9: schematically depicts a simplified block diagram according to exemplary embodiments,
- Fig. 10: schematically depicts a simplified signaling diagram according to exemplary embodiments,
- Fig. 11: schematically depicts a simplified signaling diagram according to exemplary embodiments,
- Fig. 12: schematically depicts aspects of use according to exemplary embodiments.

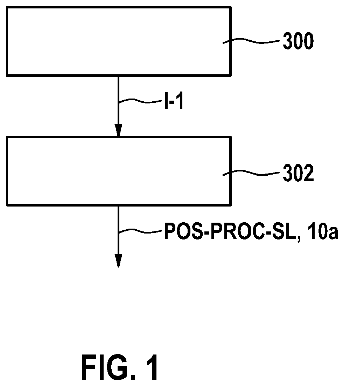

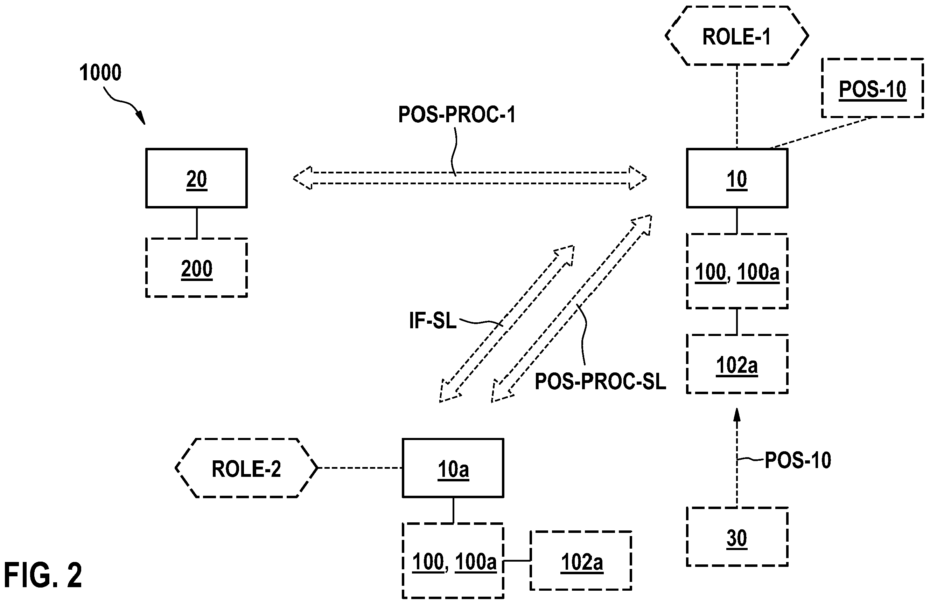

Some exemplary embodiments, Fig. 1, relate to a method, for example a computer-implemented method, comprising: providing 300, by a terminal device 10 (Fig. 2), a first information 1-1 characterizing a position POS-10 of the terminal device 10, performing 302 (Fig. 1) at least one sidelink-based positioning procedure POS-PROC-SL associated with at least one further terminal device 10a. In some exemplary embodiments, the first information 1-1 may e.g. be used for preparing and/or for performing the at least one sidelink-based positioning procedure POS-PROC-SL.

In some exemplary embodiments, the terminal device 10 and/or the at least one further terminal device 10a can e.g. be used with a wireless, for example cellular, communications system 1000, which is for example based on and/or adheres at least partially to at least one third generation partnership project, 3GPP, radio standard such as 4G (fourth generation), 5G (fifth generation), 6G (sixth generation) or other radio access technology.

In some exemplary embodiments, the first terminal device 10 and/or the at least one further terminal device 10a may be a user equipment (UE) or a data transceiver modem, which, for example, may be associated with a mobile object such as e.g. a vehicle, for example car or truck or the like.

In some exemplary embodiments, the first terminal device 10 and/or the at least one further terminal device 10a may be at least one of: an loT (Internet of Things) device, an infrastructure component or part of an infrastructure component (e.g., traffic lights, street lights, traffic sign, toll gate), an industrial automation component, e.g. IloT (Industrial loT) component or infrastructure (e.g., robots, machines, etc.), a device for a mobile broadband user, and/or a vehicle.

In some exemplary embodiments, Fig. 2, a network device 20 may be provided, which may e.g. be a base station, e.g. for a wireless, for example cellular, communications system 1000, which is for example based on and/or adheres at least partially to at least one third generation partnership project, 3GPP, radio standard such as 4G (fourth generation), 5G (fifth generation), 6G (sixth generation) or other radio access technology.

In some exemplary embodiments, Fig. 2, the network device 20 may e.g. be a gNB. e.g. at least temporarily serving at least one of the terminal devices 10, 10a.

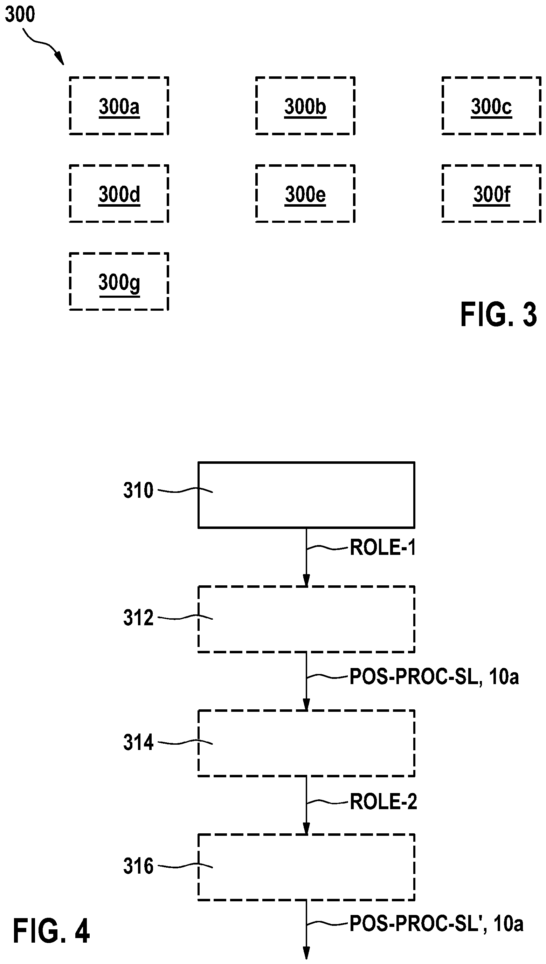

In some exemplary embodiments, Fig. 3, providing 300 (see also Fig. 1) the first information 1-1 comprises at least one of: a) determining 300a the position POS-10 of the terminal device 10 using a satellite-based positioning procedure, e.g. based on a, for example global, navigation satellite system, GNSS, b) determining 300b the position POS-10 of the terminal device 10 using laser scanning, c) determining 300c the position POS-10 of the terminal device 10 using tachometry, d) determining 300d the position POS-10 of the terminal device 10 based on a-priori knowledge related to the position POS-10, e.g. associated with at least one of: d1) a configuration of the terminal device 10, d2) standardization, d3) deployment of the terminal device 10, e.g. based on position measurements during an installation of the terminal device 10, e) receiving 300e the position POS-10 of the terminal device 10 from at least one further entity 30 (Fig. 2), f) determining 300f the position POS-10 of the terminal device 10 using sidelink-based positioning POS-PROC-SL (Fig. 2), g) determining 300g the position POS-10 of the terminal device 10 using a positioning procedure POS-PROC-1, e.g. other than sidelink-based, e.g. based on an air interface, e.g. Uu-interface according to some accepted standard.

In some exemplary embodiments, Fig. 4, the method comprises: assuming 310, by the terminal device 10, at least temporarily a role ROLE-1 of a reference terminal device and/or an anchor terminal device for the at least one sidelink-based positioning procedure 312, POS-PROC-SL with the at least one further terminal device 10a, wherein, for example, the at least one further terminal device 10a at least temporarily assumes a role ROLE-2 of a target terminal device.

In some exemplary embodiments, Fig. 4, the method comprises: assuming 314, by the terminal device 10, at least temporarily a role ROLE-2 of a target terminal device for at least one further sidelink-based positioning procedure 316, POS-PROC-SL' with the at least one further terminal device 10a, wherein, for example, the at least one further terminal device 10a at least temporarily assumes a role ROLE-1 of a reference terminal device and/or an anchor terminal device.

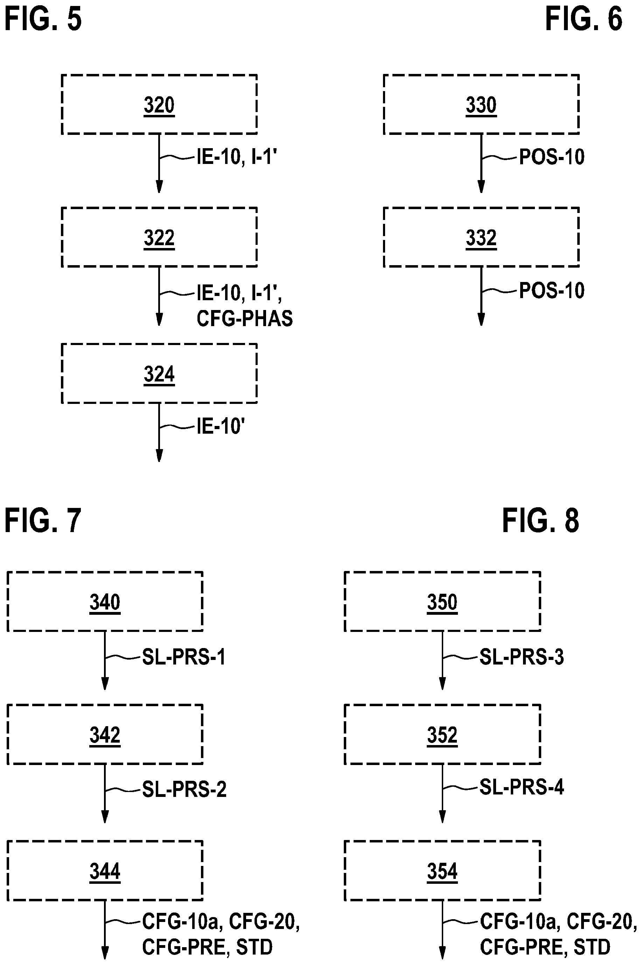

In some exemplary embodiments, Fig. 5, the method comprises: using 320, by the terminal device 10, an information element IE-10 to indicate to at least one further entity 10a, 20, for example to a network device 20 and/or to a further terminal device 10a, information I-1' related to the providing 300 (Fig. 1, 3) of the first information 1-1, wherein for example the information I-1' related to the providing 300 of the first information 1-1 characterizes at least one of: a) how the position POS-10 of the terminal device 10 is and/or has been provided, b) whether the position POS-10 of the terminal device 10 is and/or has been provided using a specific positioning procedure, e.g. a positioning procedure POS-PROC-1 other than a or the positioning procedure based on an air interface, e.g. Uu-interface according to some accepted standard, c) whether the position POS-10 of the terminal device 10 is and/or has been provided using a positioning procedure which is not defined and/or related to a communications standard, for example which is not defined and/or related to a third generation partnership project, 3GPP,- related positioning methodology, d) an accuracy related to the first information 1-1.

In some exemplary embodiments, Fig. 5, the method comprises: transmitting 322, by the terminal device 10, the information element IE-10 to the at least one further entity, for example to a network device 20 and/or to a further terminal device 10a, wherein for example the transmitting 322 is performed during at least one of: a) a configuration phase CFG-PHAS associated with the terminal device 10, b) a discovery phase associated with at least one further terminal device 10a, e.g. target terminal device.

In some exemplary embodiments, Fig. 5, the method comprises: using 324, by the terminal device 10, an information element IE-10' to signal to at least one further entity, for example to a network device 20 and/or to a further terminal device 10a, that the first information 1-1 is trustworthy.

In some exemplary embodiments, Fig. 6, the method comprises: verifying 330, by the terminal device 10, the position POS-10 of the terminal device 10, wherein for example the verifying is performed repeatedly, see block 332, for example periodically, for example during an operation of the terminal device 10.

In some exemplary embodiments, Fig. 7, the method comprises: receiving 340, by the terminal device 10, e.g. via a sidelink interface IF-SL (Fig. 2), at least a first positioning reference signal SL-PRS-1, wherein, for example, the at least one first positioning reference signal SL-PRS-1 may e.g. be a groupcast signal transmitted from at least one further terminal device 10a, e.g. a target terminal device, and, transmitting 342, by the terminal device 10, a second positioning reference signal SL-PRS-2 based on the first positioning reference signal SL-PRS-1, for example in response to the receiving 340 of the first positioning reference signal SL-PRS-1, via the sidelink interface IF-SL, e.g. at least to the at least one further terminal device 10a.

In some exemplary embodiments, Fig. 7, the transmitting 342 of the second positioning reference signal SL-PRS-2 comprises at least one of: a) transmitting the second positioning reference signal multiplexed in time, e.g. with respect to the first positioning reference signal, b) transmitting the second positioning reference signal interleaved in at least one of b1) time and b2) frequency, e.g. with respect to the first positioning reference signal.

In some exemplary embodiments, Fig. 8, the method comprises: transmitting 350, by the terminal device 10, a third positioning reference signal SL-PRS-3 via the sidelink interface IF-SL, e.g. in form of a groupcast signal, e.g. at least to the at least one further terminal device 10a, and receiving 352, by the terminal device 10, via the sidelink interface IF-SL, at least a fourth positioning reference signal SL-PRS-4, wherein, for example, the fourth positioning reference signal SL-PRS-4 is transmitted by the at least one further terminal device 10a, e.g. based on the third positioning reference signal SL-PRS-3, for example in response to the third positioning reference signal SL-PRS-3.

In some exemplary embodiments, Fig. 7, 8, the method comprises: using 344, 354 time and/or frequency resources, e.g. for at least one of the transmitting 342, 350 and the receiving 340, 352, based on at least one of: a) configuration CFG-10a by at least one further terminal device 10a, e.g. target terminal device, e.g. associated with at least one preferred sidelink feedback channel of the at least one further terminal device, b) configuration CFG-20 by at least one network device 20, e.g. via Uu interface control information, c) preconfiguration CFG-PRE, e.g. of the terminal device 10, d) standardization STD.

In some exemplary embodiments, at least some aspects of Fig. 7, 8 enable to provide an efficient sidelink-based positioning procedure.

Further exemplary embodiments, Fig. 2, relate to an apparatus 100, for example for a terminal device 10, 10a, for performing the method according to the embodiments.

Further exemplary embodiments, Fig. 2, relate to an apparatus 100a, for example for a terminal device 10, 10a, comprising means 102a, for performing the method according to the embodiments.

In some exemplary embodiments, the apparatus 100, 100a and/or its functionality may e.g. be provided within the terminal device 10, 10a. In some exemplary embodiments, the apparatus 100, 100a and/or its functionality may e.g. be provided outside of the terminal device 10, 10a, e.g. in form of a, for example separate, device, that may e.g. be at least temporarily coupled with the terminal device 10, 10a.

Further exemplary embodiments, Fig. 2, relate to a communication system or network 1000 comprising at least one apparatus 100, 100a according to the embodiments.

In some exemplary embodiments, Fig. 2, the communication system or network 1000 may comprise at least one terminal device 10, 10a comprising at least one apparatus 100, 100a according to the embodiments.

In some exemplary embodiments, Fig. 2, the communication system or network 1000 may comprise at least one network device, e.g. gNB, 20, which may e.g. perform positioning procedures POS-PROC-1, e.g. based on a Uu-interface, associated with the terminal device 10.

In some exemplary embodiments, the gNB 20 may e.g. trigger the sidelink-based positioning procedure POS-PROC-SL.

In some exemplary embodiments, the gNB 20 may comprise an apparatus 200 for controlling an operation of the gNB 20.

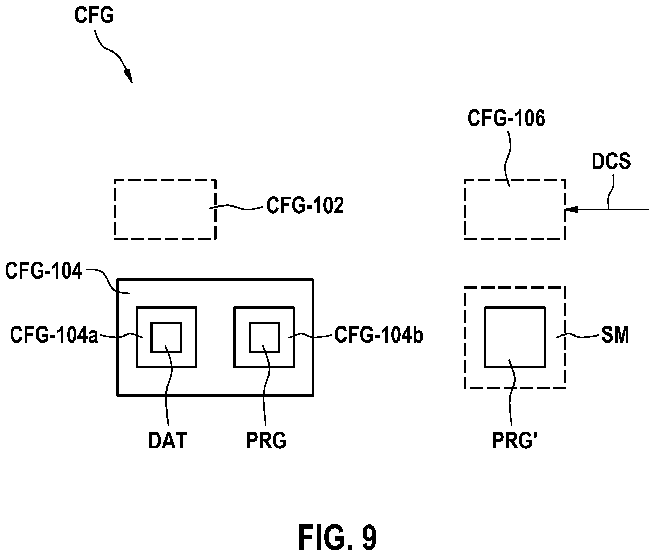

Fig. 9 schematically depicts a simplified block diagram of a configuration CFG according to further exemplary embodiments. In some exemplary embodiments, the depicted configuration CFG may e.g. be used for implementing at least one of the apparatus 100, 100a, 200 according to the embodiments.

In some exemplary embodiments, the configuration CFG comprises at least one calculating unit, e.g. processor, CFG-102 and at least one memory unit CFG-104 associated with (i.e., usably by) the at least one calculating unit CFG-102, e.g. for at least temporarily storing a computer program PRG and/or data DAT, wherein the computer program PRG is e.g. configured to at least temporarily control an operation of the configuration CFG, e.g. for (e.g., within) at least one apparatus 100, 100a, 200, such as e.g. the execution of a method according to some exemplary embodiments.

In some exemplary embodiments, the at least one calculating unit CFG-102 comprises at least one core (not shown) for executing the computer program PRG or at least parts thereof, e.g. for executing the method according to the embodiments or at least one or more steps and/or other aspects thereof.

According to further exemplary embodiments, the at least one calculating unit CFG-102 may comprise at least one of the following elements: a microprocessor, a microcontroller, a digital signal processor (DSP), a programmable logic element (e.g., FPGA, field programmable gate array), an ASIC (application specific integrated circuit), hardware circuitry, a tensor processor, a graphics processing unit (GPU). According to further preferred embodiments, any combination of two or more of these elements is also possible.

According to further exemplary embodiments, the memory unit CFG-104 comprises at least one of the following elements: a volatile memory CFG-104a, e.g. a random-access memory (RAM), a non-volatile memory CFG-104b, e.g. a Flash-EEPROM.

In some exemplary embodiments, the computer program PRG is at least temporarily stored in the non-volatile memory CFG-104b. Data CFG-DAT (e.g. associated with the first information I-1 and/or the information elements IE-10, IE-10' and the like), which may e.g. be used for executing the method according to some exemplary embodiments, may at least temporarily be stored in the RAM CFG-104a.

In some exemplary embodiments, an optional computer-readable storage medium SM comprising instructions, e.g. in the form of a further computer program PRG', may be provided, wherein the further computer program PRG', when executed by a computer, i.e. by the calculating unit CFG-102, may cause the computer CFG-102 to carry out the method according to the embodiments. As an example, the storage medium SM may comprise or represent a digital storage medium such as a semiconductor memory device (e.g., solid state drive, SSD) and/or a magnetic storage medium such as a disk or harddisk drive (HDD) and/or an optical storage medium such as a compact disc (CD) or DVD (digital versatile disc) or the like.

In some exemplary embodiments, the configuration CFG may comprise an optional data interface CFG-106, e.g. for bidirectional data exchange with an external device (not shown). As an example, by means of the data interface CFG-106, a data carrier signal DCS may be received, e.g. from the external device, for example via a wired or a wireless data transmission medium, e.g. over a (virtual) private computer network and/or a public computer network such as e.g. the Internet.

In some exemplary embodiments, the data carrier signal DCS may represent or carry the computer program PRG, PRG' according to the embodiments, or at least a part thereof.

Further exemplary embodiments relate to a computer program PRG, PRG' comprising instructions which, when the program is executed by a computer CFG-102, cause the computer CFG-102 to carry out the method according to the embodiments.

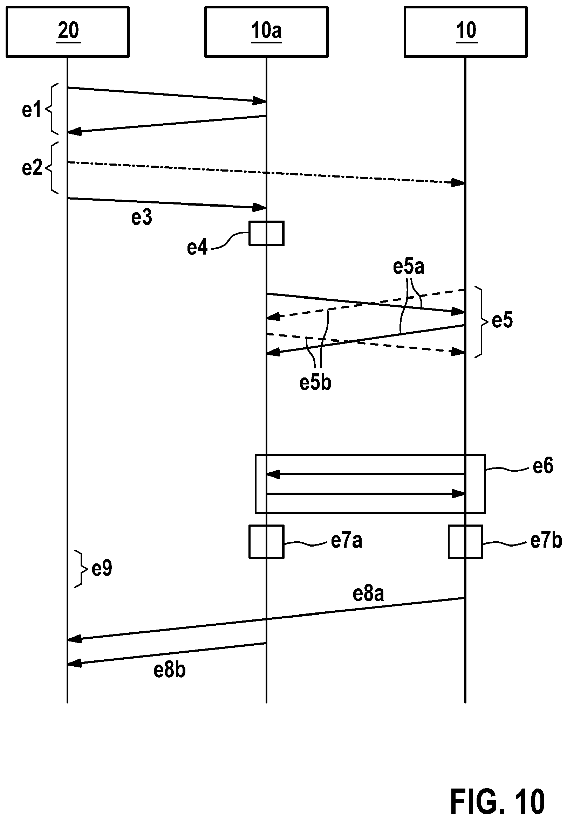

Fig. 10 schematically depicts a simplified signaling diagram according to exemplary embodiments, wherein exemplary signaling between the gNB 20, the terminal device 10, e.g. at least temporarily operating as an anchor UE, and the further terminal device 10a, e.g. at least temporarily operating as a target UE, is considered.

In some exemplary embodiments, element e1 symbolizes a Uu-based positioning procedure associated with the target UE 10a.

In some exemplary embodiments, element e2 symbolizes an optional downlink configuration, e.g. related to a trigger, e.g. for a discovery procedure associated with the terminal devices 10, 10a.

In some exemplary embodiments, element e3 symbolizes the gNB 20 requesting the target UE 10a to perform sidelink-based positioning, e.g. using predefined anchors, e.g. using the UE 10 as an anchor UE.

In some exemplary embodiments, element e4 symbolizes the UE 10a switching to a, for example next, sidelink positioning opportunity, e.g. from a communication e3 with the gNB 20 over e.g. the Uu-interface.

In some exemplary embodiments, element e5 symbolizes an optional discovery process associated with the UE 10, 10a. In some exemplary embodiments, the optional discovery process may e.g. be initiated by the target UE 10a, see arrows e5a. In some exemplary embodiments, the optional discovery process may e.g. be initiated by the anchor UE 10, see arrows e5b.

In some exemplary embodiments, element e6 symbolizes the sidelink-based positioning procedure, wherein e.g. sidelink reference signals may be exchanged between the UE 10, 10a, e.g. similar to or based on the exemplary procedure(s) of Fig. 7 and/or 8.

In some exemplary embodiments, elements e7a, e7b symbolize respective sidelink positioning measurement gaps, which may result from switching from a use of the sidelink interface IF-SL, e.g. a PC5 interface, to an air interface, e.g. Uu interface, e.g. for transmitting e8a, e8b result(s) of the sidelink-based positioning procedure e6 to the gNB 20.

In some exemplary embodiments, element e9 symbolizes a sidelink delay margin.

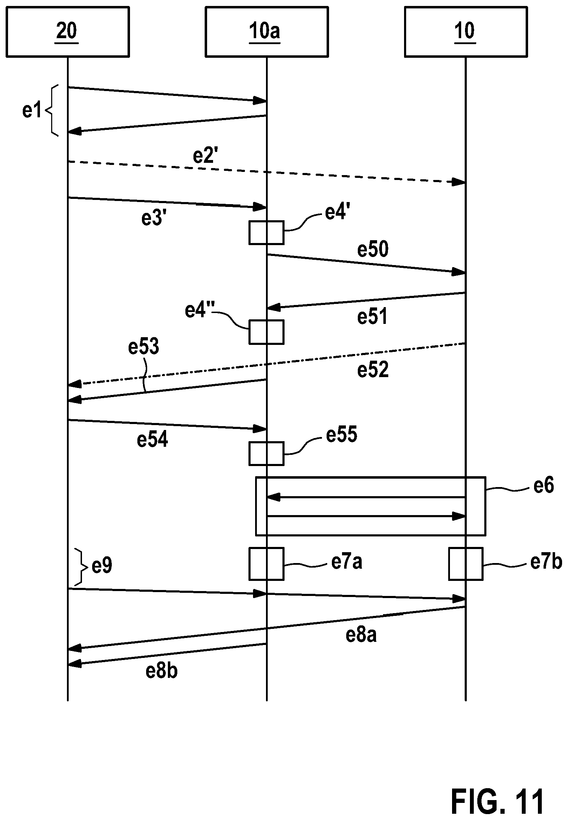

Fig. 11 schematically depicts a simplified signaling diagram according to exemplary embodiments, wherein exemplary signaling between the gNB 20, the terminal device 10, e.g. at least temporarily operating as an anchor UE, and the further terminal device 10a, e.g. at least temporarily operating as a target UE, is considered. In some respect, the signaling diagram of Fig. 11 is similar to the signaling diagram of Fig. 10, wherein similar or identical elements are denoted with similar or identical reference signs.

In some exemplary embodiments, element e1 symbolizes a Uu-based positioning procedure associated with the target UE 10a.

In some exemplary embodiments, element e2' of Fig. 11 symbolizes an optional downlink transmission, e.g. related to, for example on-demand, triggered anchor UEs, e.g. for a discovery procedure associated with the terminal devices 10, 10a.

In some exemplary embodiments, element e3' symbolizes the gNB 20 requesting the target UE 10a to perform sidelink-based positioning, e.g. with a discovery procedure and/or with predefined anchors, wherein a configuration of the predefined anchors may e.g. be included in element e3'.

In some exemplary embodiments, element e4' symbolizes the UE 10a switching to a, for example next, sidelink positioning opportunity, e.g. from a communication e3' with the gNB 20 over e.g. the Uu-interface.

In some exemplary embodiments, element e50 symbolizes an optional discovery request by the target UE 10a, end element e51 symbolizes a, for example mandatory, response from the anchor UE 10 to the target UE 10a.

In some exemplary embodiments, element e4" symbolizes the UE 10a switching from the SL interface to the Uu-interface.

In some exemplary embodiments, element e52 symbolizes an optional sidelink positioning response from the anchor UE 10 to the gNB 20, e.g. comprising neighbor reporting.

In some exemplary embodiments, element e53 symbolizes an optional sidelink positioning response from the target UE 10a to the gNB 20, e.g. comprising neighbor reporting.

In some exemplary embodiments, element e54 symbolizes an optional sidelink positioning confirmation, which may e.g. be transmitted by the gNB 20, e.g. based on at least one of the elements e52, e53, and which may be used to instruct the target UE 10a to perform sidelink positioning e6, e.g. after switching e55 to a, for example next, sidelink positioning opportunity.

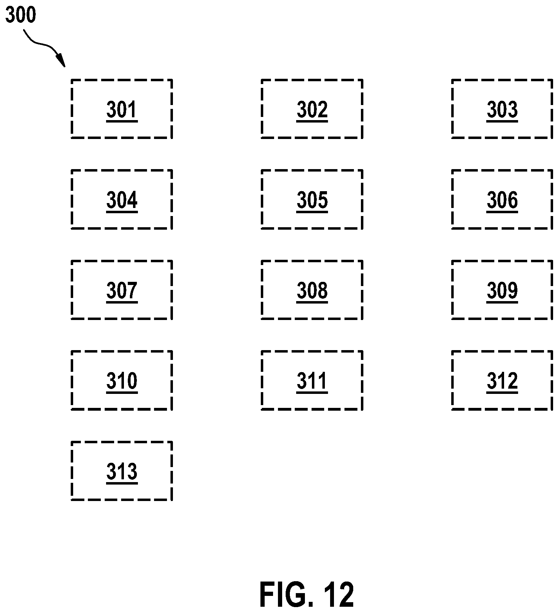

Further exemplary embodiments, Fig. 12, relate to a use 300 of the method according to the embodiments and/or of the apparatus 100, 100a, 200 according to the embodiments and/or of the communication system 1000 according to the embodiments and/or of the computer program PRG, PRG' according to the embodiments, and/or of the computer-readable storage medium SM according to the embodiments and/or of the data carrier signal DCS according to the embodiments, for at least one of: a) performing 301 at least one sidelink-based positioning procedure, b) assisting 302 a network device 20 and/or at least one further terminal device 10a in performing at least one positioning procedure, c) validating 303 at least one positioning procedure, d) increasing 304 a precision of at least one positioning procedure associated with the terminal device, e) performing 305 hybrid positioning associated with the terminal device, f) employing 306 sidelink ranging capabilities of at least one terminal device, e.g. for positioning, g) increasing 307 a flexibility of positioning associated with at the terminal device, h) performing 308 on-demand sidelink-based positioning, e.g. upon request of at least one network device and/or at least one further terminal device, i) providing 309 positioning capabilities to communications networks, e.g. associated with car-to-car communication and/or communication of Industrial Internet of Things, IloT, device and/or vehicle-to-X, V2X, communication, j) assigning 310, for example dynamically, e.g. during operation, assigning, different roles associated with at least one sidelink-based positioning procedure to the terminal device, k) determining 311 a position POS-10 of the terminal device 10, e.g. as a reference terminal device and/or as an anchor terminal device, I) assessing 312 a reliability of a position POS-10 of the terminal device 10, e.g. as a reference terminal device and/or as an anchor terminal device, m) verifying 313, for example by a network device 20, the position POS-10 of the terminal device 10.

In some exemplary embodiments, the principle according to the embodiments may e.g. be used for determining a position of a terminal device 10, 10a, which may e.g. at least temporarily act as an anchor UE or reference UE.

In some exemplary embodiments, the principle according to the embodiments may e.g. be used for verifying a position POS-10 of a UE, e.g. anchor UE or reference UE.

In some exemplary embodiments, e.g. for anchor/reference UEs, a positioning of the UE may e.g. be verified initially and/or during the operation of UE (e.g., repeatedly, e.g. periodically), which, in some exemplary embodiments, may e.g. lead to a network-verified-position UE.

In some exemplary embodiments, a sharing of the UE's positioning capability is proposed, e.g. performing GNSS positioning, e.g. including a GNSS accuracy, and/or performing a Uu based location, e.g. with a certain accuracy (or a threshold), and/or considering a geo-defined location (e.g., inserted and/or verified during installation and/or could be updated during maintenance etc.).

In some exemplary embodiments, the UE 10 may perform a discovery process, e.g. with a target UE 10a, and in some exemplary embodiments, during the discovery process, the information, whether or not the reference/anchor UE 10 is a, for example, network-verified-position UE, is conveyed. In some exemplary embodiments, this information (i.e., whether or not the reference/anchor UE 10 is a, for example, network-verified-position UE) can be conveyed, e.g. also, during a radio resource control, RRC, communication, e.g. between the anchor UE 10 and the target UE 10a.

In some exemplary embodiments, e.g. to enhance an accuracy of sidelink positioning, multilateration sidelink positioning estimate(s) can be considered. In this case, more than one reference UE 10 with (e.g., network-verified-position POS-10) may be used.

In some exemplary embodiments, the network, e.g. gNB 20, may select more than one UE, e.g. for discovery (e.g., prepared for discovery), where, for example, the target UE 10a may select those UE with e.g. RSSI (Received Signal Strength Indicator)/RSRP (Reference signal received power) exceeding a certain threshold.

In some exemplary embodiments, e.g. after a target UE 10a is requested, e.g. by the gNB 20, to initiate a discovery (see, for example, element e3' of Fig. 11), and after discovery is conducted by the target UE 10a, e.g. based on an accuracy metric, the target UE 10a may select more than one reference/anchor UE 10 and may e.g. start multilateration sidelink positioning estimations, e.g. similar to block e6 of Fig. 11.

In some exemplary embodiments, e.g. in either case (e.g., target-UE based or network based multilateration SL positioning), the multilateration may involve aspects of round-trip based measurements. In some exemplary embodiments, e.g. a groupcast SL positioning reference signal, e.g. SL-PRS, may be sent from the target UE 10a to all selected reference UEs 10, e.g. after discovery, e.g., to those anchor UE 10 with high RSSI/RSRP or within a certain communication range or following some other requirement (e.g., having their own positioning conveyed with high accuracy or trustworthiness).

In some exemplary embodiments, all selected reference UEs 10 should send SL-PRS back to the target UE 10a either, for example, a) multiplexed in time or interleaved in Time and/or frequency, e.g. replying the target UE SL-PRS sent before. In some exemplary embodiments, the resource locations for replying may e.g. be configured by the target UE 10a, e.g. on its preferred sidelink feedback channel (e.g., for SL-PRS feedback in this case) or may be configured by the gNB 20 (e.g., via Uu control information), or pre-configured in the sidelink capable UEs.

In some exemplary embodiments, e.g. in either case (e.g., target-UE based or network based multilateration SL positioning), the multilateration may involve aspects of single trip measurements, e.g. as opposed to round-trip based measurements.

In some exemplary embodiments, a groupcast SL-PRS sent from the target UE 10a, e.g. to all selected reference UEs 10 (e.g., after discovery), e.g., within a certain communication range or following some other, can be used, wherein, for example, all reference UE (fulfilling these criteria) send to the network, e.g. gNB 20, their computed sidelink positioning, and the network may aggregate the multilateration sidelink positioning estimation.

In some exemplary embodiments, the, for example all, reference UEs 10, which have been selected (e.g., during discovery and/or by network), may send their SL-PRS to a target UE 10a, e.g. multiplexed in time or interleaved in Time and/or frequency, wherein, for example, the target UE 10a may determine, e.g. compute, the multilateration sidelink positioning estimations as stated above.

In some exemplary embodiments, the network 1000, e.g. gNB 20, may indicate or up to the UE to side to send either the final positioning result to the network or all possible computational combinations to the network.

In some exemplary embodiments, the first information I-1 and/or further information exemplarily disclosed above may e.g. be transmitted, e.g. between involved device, using at least one of: a) level 1 (L1) signaling, b) level 2 (L2) signaling.

## Claims

1. A method, for example a computer-implemented method, comprising: providing (300), by a terminal device (10), a first information (1-1) characterizing a position (POS-10) of the terminal device (10), performing (302) at least one sidelink-based positioning procedure (POS-PROC-SL) associated with at least one further terminal device (10a).

2. The method according to claim 1, wherein providing (300) the first information (1-1) comprises at least one of: a) determining (300a) the position (POS-10) of the terminal device (20) using a satellite-based positioning procedure, e.g. based on a, for example global, navigation satellite system, b) determining (300b) the position (POS-10) of the terminal device (20) using laser scanning, c) determining (300c) the position (POS-10) of the terminal device (20) using tachometry, d) determining (300d) the position (POS-10) of the terminal device (20) based on a-priori knowledge related to the position (POS-10), e.g. associated with at least one of: d1) a configuration of the terminal device (10), d2) standardization, d3) deployment of the terminal device (10), e.g. based on position measurements during an installation of the terminal device (10), e) receiving (300e) the position (POS-10) of the terminal device (10) from at least one further entity (30), f) determining (300f) the position (POS-10) of the terminal device (20) using sidelink-based positioning, g) determining (300g) the position (POS-10) of the terminal device (20) using a positioning procedure (POS-PROC-1), e.g. other than sidelink-based, e.g. based on an air interface, e.g. Uu-interface according to some accepted standard.

3. The method according to any of the preceding claims, comprising: assuming (310), by the terminal device (10), at least temporarily a role (ROLE-1) of a reference terminal device and/or an anchor terminal device for the at least one sidelink-based positioning procedure (312, POS-PROC-SL) with the at least one further terminal device (10a), wherein, for example, the at least one further terminal device (10a) at least temporarily assumes a role (ROLE-2) of a target terminal device.

4. The method according to claim 3, comprising: assuming (314), by the terminal device (10), at least temporarily a role (ROLE-2) of a target terminal device for at least one further sidelink-based positioning procedure (316, POS-PROC-SL') with the at least one further terminal device (10a), wherein, for example, the at least one further terminal device (10a) at least temporarily assumes a role (ROLE-2) of a reference terminal device and/or an anchor terminal device.

5. The method according to any of the preceding claims, comprising: using (320), by the terminal device (10), an information element (IE-10) to indicate to at least one further entity (10a, 20), for example to a network device (20) and/or to a further terminal device (10a), information (I-1') related to the providing (300) of the first information (1-1), wherein for example the information (I-1') related to the providing (300) of the first information (1-1) characterizes at least one of: a) how the position (POS-10) of the terminal device (10) is and/or has been provided, b) whether the position (POS-10) of the terminal device (10) is and/or has been provided using a specific positioning procedure, e.g. a positioning procedure other than a or the positioning procedure (POS-PROC-1) based on an air interface, e.g. Uu-interface according to some accepted standard, c) whether the position (POS-10) of the terminal device (10) is and/or has been provided using a positioning procedure which is not defined and/or related to a communications standard, for example which is not defined and/or related to a third generation partnership project, 3GPP,- related positioning methodology, d) an accuracy related to the first information (1-1).

6. The method according to claim 5, comprising: transmitting (322), by the terminal device (10), the information element (IE-10) to the at least one further entity (10a, 20), for example to a network device (20) and/or to a further terminal device (10a), wherein for example the transmitting (322) is performed during at least one of: a) a configuration phase (CFG-PHAS) associated with the terminal device (10), b) a discovery phase associated with at least one further terminal device (10a), e.g. target terminal device.

7. The method according to any of the preceding claims, comprising: using (324), by the terminal device (10), an information element (IE-10') to signal to at least one further entity (10a, 20), for example to a network device (20) and/or to a further terminal device (10a), that the first information (1-1) is trustworthy.

8. The method according to any of the preceding claims, comprising: verifying (330), by the terminal device (10), the position (POS-10) of the terminal device (10), wherein for example the verifying (330) is performed (332) repeatedly, for example periodically, for example during an operation of the terminal device (10).

9. The method according to any of the preceding claims, comprising: receiving (340), by the terminal device (10), via a sidelink interface (IF-SL), at least a first positioning reference signal (SL-PRS-1), wherein, for example, the at least one first positioning reference signal (SL-PRS-1) may e.g. be a groupcast signal transmitted from at least one further terminal device (10a), e.g. a target terminal device, and, transmitting (342), by the terminal device (10), a second positioning reference signal (SL-PRS-2) based on the first positioning reference signal (SL-PRS-1), for example in response to the receiving (340) of the first positioning reference signal (SL-PRS-1), via the sidelink interface (IF-SL), e.g. at least to the at least one further terminal device (10a).

10. The method according to claim 9, wherein the transmitting (342) of the second positioning reference signal (SL-PRS-2) comprises at least one of: a) transmitting (342a) the second positioning reference signal (SL-PRS-2) multiplexed in time, e.g. with respect to the first positioning reference signal (SL-PRS-1), b) transmitting (342b) the second positioning reference signal (SL-PRS-2) interleaved in at least one of b1) time and b2) frequency, e.g. with respect to the first positioning reference signal (SL-PRS-1).

11. The method according to any of the preceding claims, comprising: transmitting (350), by the terminal device (10), a third positioning reference signal (SL-PRS-3) via the sidelink interface (IF-SL), e.g. in form of a groupcast signal, e.g. at least to the at least one further terminal device (10a), and receiving (352), by the terminal device (10), via the sidelink interface (IF-SL), at least a fourth positioning reference signal (SL-PRS-4), wherein, for example, the fourth positioning reference signal (SL-PRS-4) is transmitted by the at least one further terminal device (10a), e.g. based on the third positioning reference signal (SL-PRS-3), for example in response to the third positioning reference signal (SL-PRS-3).

12. The method according to any of the claims 9 to 11, comprising: using (344; 354) time and/or frequency resources, e.g. for at least one of the transmitting (342; 350) and the receiving (340; 352), based on at least one of: a) configuration (CFG-10a) by at least one further terminal device (10a), e.g. target terminal device, e.g. associated with at least one preferred sidelink feedback channel of the at least one further terminal device (10a), b) configuration (CFG-20) by at least one network device (20), e.g. via Uu interface control information, c) preconfiguration (CFG-PRE), e.g. of the terminal device (10), d) standardization (STD).

13. An apparatus (100), for example for a terminal device (10, 10a), for performing the method according to at least one of the preceding claims.

14. An apparatus (100a), for example for a terminal device (10, 10a), comprising means (102a), for performing the method according to at least one of the claims 1 to 12.

15. A communication system (1000) comprising at least one apparatus (100; 100a) according to any of the claims 13, 14.

16. A use (300) of the method according to at least one of the claims 1 to 12 and/or of the apparatus (100; 100a) according to any of the claims 13, 14 and/or of the communication system (1000) according to claim 15 and/or of a computer program (PRG; PRG') comprising instructions which, when the program (PRG; PRG') is executed by a computer (CFG-102), cause the computer (CFG-102) to carry out the method according to at least one of the claims 1 to 12, and/or of a computer-readable storage medium (SM) comprising instructions (PRG') which, when executed by a computer (CFG-102), cause the computer (CFG-102) to carry out the method according to at least one of the claims 1 to 12 and/or of a data carrier signal (DCS) carrying and/or characterizing a computer program (PRG; PRG') comprising instructions which, when the program (PRG; PRG') is executed by a computer (CFG-102), cause the computer (CFG-102) to carry out the method according to at least one of the claims 1 to 12, for at least one of: a) performing (301) at least one sidelink-based positioning procedure (POS-PROC-SL, POS-PROC-SL-1, POS-PROC-SL-2), b) assisting (302) a network device (20) and/or at least one further terminal device (10a) in performing at least one positioning procedure (POS-PROC-1; POS-PROC-SL), c) validating (303) at least one positioning procedure (POS-PROC-1; POS-PROC-SL), d) increasing (304) a precision of at least one positioning procedure (POS-PROC-1; POS-PROC-SL) associated with the terminal device (10), e) performing (305) hybrid positioning associated with the terminal device (10), f) employing (306) sidelink ranging capabilities of at least one terminal device (10, 10a), e.g. for positioning, g) increasing (307) a flexibility of positioning associated with at the terminal device (10), h) performing (308) on-demand sidelink-based positioning, e.g. upon request of at least one network device (20) and/or at least one further terminal device (10a), i) providing (309) positioning capabilities to communications networks (1000), e.g. associated with car-to-car communication and/or communication of Industrial Internet of Things, IloT, device and/or vehicle-to-X, V2X, communication, j) assigning (310), for example dynamically, e.g. during operation, assigning, different roles (ROLE-1, ROLE-2) associated with at least one sidelink-based positioning procedure (POS-PROC-SL) to the terminal device (10), k) determining (311) a position of the terminal device (10), e.g. as a reference terminal device and/or as an anchor terminal device, I) assessing (312) a reliability of a position of the terminal device (10), e.g. as a reference terminal device and/or as an anchor terminal device, m) verifying (313), for example by a network device (20), the position of the terminal device (10).
